# FASCICULE DE BREVET EUROPEEN

(11) **EP 3 022 428 B1**
(45) Date de publication et mention de la délivrance du brevet: **06.03.2019**
(21) Numéro de dépôt: 14790141.7
(22) Date de dépôt: 17.07.2014
(51) Int. Cl.: F02K 1/76, B66F 3/16, F16H 25/24, B64C 13/28

(54) **SYSTÈME D'INVERSEUR DE POUSSÉE ÉLECTRIQUE POUR NACELLE DE MOTEUR D'AÉRONEF ET NACELLE DE MOTEUR D'AÉRONEF AINSI ÉQUIPÉE**
ELEKTRISCHES SCHUBUMKEHRSYSTEM FÜR EINE TRIEBWERKSGONDEL UND TRIEBWERKSGONDEL DAMIT
ELECTRIC THRUST REVERSER SYSTEM FOR AN AIRCRAFT ENGINE NACELLE AND AIRCRAFT ENGINE NACELLE PROVIDED WITH SAME

(30) Priorité: 17.07.2013 FR 1357005
(43) Date de publication de la demande: 25.05.2016
(73) Titulaire: Safran Nacelles, 76700 Gonfreville-l'Orcher (FR)
(72) Inventeur: MAALIOUNE, Hakim, 78630 Orgeval (FR); DESCAMPS, Alexandre, 75015 Paris (FR); MORADELL-CASELLAS, Pierre, 61100 Saint Georges Des Groseillers (FR)
(74) Mandataire: Gaillarde, Frédéric F. Ch.
(86) Numéro de dépôt international: PCT/FR2014/051837
(87) Numéro de publication internationale: WO 2015/007996

(56) Documents cités:
- EP-A2- 2 604 514
- WO-A1-2010/119210
- FR-A1- 2 913 080
- US-A1- 2007 057 119
- US-A1- 2007 220 998

## Description

La présente invention concerne un système d'inverseur de poussée électrique pour nacelle de moteur d'aéronef et une nacelle de moteur d'aéronef ainsi équipée.

Dans l'état de la technique, on connaît un type d'inverseur de poussée dont le mécanisme d'inversion de poussée est manoeuvré à l'aide de moteurs électriques.

Deux types de mécanismes d'inversion de poussée sont particulièrement connus : les inverseurs à portes et les inverseurs à grilles. Pour manoeuvrer ces mécanismes, on connaît des vérins spéciaux qui peuvent être entraînés sur commande par un moteur électrique.

Dans le cas d'un inverseur de poussée à portes, un système de verrouillage des portes est disposé qui comporte des organes de commande et des verrous qui permettent de lier chaque porte à une structure fixe de la nacelle. Lorsque la commande d'actionnement des portes de l'inverseur de poussée est émise, le système de verrouillage des portes d'inverseur de poussée est alors désactivé par ses organes de commande, et un ordre est ensuite émis qui met en mouvement à l'aide des vérins les portes de l'inverseur de poussée dans une position active.

Un ordre inverse est ensuite émis pour désactiver l'inverseur de poussée en repliant à l'aide des vérins les portes d'inverseur de poussée dans une position de propulsion directe, puis pour réactiver le système de verrouillage.

Selon des mouvements différents, un processus similaire s'applique à l'inverseur de poussée à grilles, un capot mobile étant actionné en translation de manière à découvrir ou recouvrir des grilles de déviation.

La succession des ces différentes étapes et la mise en oeuvre de nombreux organes différents rend ces systèmes particulièrement complexes, et ce d'autant plus que des contraintes réglementaires de sécurité imposent le respect de normes qui rendent souvent nécessaire cette multiplication des organes et éléments (redondance d'organes).

Ainsi qu'il est connu, plusieurs vérins d'actionnement de mécanismes d'inversion de poussée, portes ou grilles, doivent être couplés à ces mécanismes. Un nombre élevé d'organes d'actionnement, verrous et vérins principalement, est alors présent dans le système d'inverseur de poussée électrique.

Un problème réside alors dans la fiabilité de fonctionnement d'un tel système d'inverseur de poussée électrique.

Dans l'état de la technique, il est par ailleurs connu de configurer le système de commande et de verrouillage de l'inverseur de poussée électrique en plusieurs lignes de défense, notamment mécanique, électronique (commande) et électrique. Un système d'inverseur de poussée électrique est donc aussi astreint à adopter une architecture de sécurité telle qu'enseignée dans l'état de la technique.

La présente invention vise à améliorer la fiabilité tout en conservant la sécurité par redondance en lignes de défense de tels systèmes d'inverseur de poussée électrique.

Pour ce faire, la présente invention se rapporte à une architecture d'inverseur de poussée électrique qui permet de s'intégrer dans un système électrique et de commande de nacelle de moteur d'aéronef de manière à apporter une commande simple et robuste et en augmentant sa fiabilité.

A cet effet, selon la revendication 1, la présente invention concerne un système d'inverseur de poussée électrique pour nacelle de moteur d'aéronef, d'un genre comportant au moins un mécanisme d'actionnement d'un mécanisme d'inversion de poussée comme une porte d'inverseur. Le mécanisme d'actionnement comporte un premier et un second vérin d'entraînement, chaque vérin comportant un boîtier de connexion mécanique, un verrou primaire et une tige mobile solidaire d'un point lié au mécanisme d'inversion de poussée associé, comme une porte d'inverseur, une unité d'entraînement motorisé étant connectée mécaniquement par des arbres flexibles aux boîtiers de connexion mécanique de chaque vérin du mécanisme d'actionnement et mise en mouvement sous la commande d'une unité de commande à l'aide d'une liaison électrique et un verrou tertiaire pour solidariser le mécanisme d'inversion de poussée associé comme une porte d'inverseur de poussée à une structure fixe de la nacelle.

Selon l'invention, le verrou primaire est intégré au vérin d'entraînement, le vérin d'entraînement étant du type à mouvement perdu.

Ainsi, en intégrant le système de verrouillage primaire au vérin d'actionnement, il est permis de réunir deux organes en un. L'architecture d'ensemble et sa commande s'en trouve ainsi simplifiée.

En effet, le document US-A-2007/0220998 ou le document US20090090204 décrivent chacun un vérin spécial qui apporte une fonction supplémentaire de verrouillage exécutée lors des premiers tours de rotation du vérin.

Un mécanisme spécialement conçu, dit « lost motion » ou à mouvement perdu, permet d'abord de déverrouiller le vérin, puis seulement après le déverrouillage, d'exécuter l'allongement de la tige mobile du vérin proprement dit. Lors de la fermeture du mécanisme d'inversion de poussée connecté au vérin, la tige du vérin se rétracte dans le corps du vérin. Puis, à un certain point, le mécanisme de verrouillage entre à nouveau en action lors des derniers tours de l'arbre d'entrée du vérin.

Il est apparu de manière surprenante à la demanderesse qu'un tel vérin spécial pouvait être utilisé dans le cadre d'un système d'actionnement d'inverseur de poussée tout en respectant les normes de sécurité appliquant le principe de trois lignes de défense mécanique, électronique et électrique grâce à un système adapté utilisant à la fois les ressources de l'ensemble propulsif (moteur / nacelle) mais également les ressources avion. A noter qu'aucun calculateur supplémentaire n'est nécessaire.

Selon d'autres caractéristiques supplémentaires :
- les divers mécanismes d'inversion de poussée comme des portes d'inverseur de poussée sont mécaniquement liés et un seul verrou tertiaire est disposé en relation avec l'un des mécanismes d'actionnement de porte ou plus généralement de mécanisme d'inversion de poussée associé ;
- l'unité de commande est configurée pour constituer le système en trois lignes de défense, structurées en trois niveaux comprenant : au niveau des ordres, un ordre du contrôleur du moteur associé à l'inverseur de poussée étant confirmé par un ordre de chacun d'au moins deux calculateurs de l'avion et/ou du moteur et/ou de la nacelle de manière à assurer une redondance fonctionnelle, au niveau mécanique, les trois verrous comprenant deux verrous primaires et un verrou tertiaire étant déverrouillés, au niveau de l'alimentation électrique, trois sources d'alimentation électrique différentes étant disposées pour que le système d'inverseur de poussée fonctionne et comprenant une source haute puissance, une source basse puissance et une source réservée au verrou tertiaire, de sorte que l'absence de déverrouillage d'une seule ligne de défense entraîne le blocage du déploiement de l'inverseur de poussée ;
- le système d'inverseur de poussée étant du type comportant deux mécanismes d'inversion de poussée comme des mécanismes d'actionnement de porte d'inverseur de poussée, l'unité de commande de l'inverseur de poussée comporte un coeur de traitement qui transmet des ordres de commande à un processeur de courant continu connecté à un module de contrôle en énergie continue connecté en parallèle à deux onduleurs qui débitent par des liaisons l'énergie électrique alternative à l'unité d'entraînement motorisé de chaque mécanisme d'inversion de poussée, le module de contrôle en énergie continue recevant les informations de capteurs de position et de proximité des différents vérins des mécanismes d'inversion de poussée de sorte que les commandes du coeur de traitement numérique produisent des rampes de courant pour gérer l'actionnement des mécanismes d'inversion de poussée entraînés par les unités d'entraînement motorisé ;
- le coeur de traitement numérique commande aussi un circuit de contrôle des freins associés aux mécanismes d'actionnement des mécanismes d'inversion de poussée comme des portes d'inverseur de poussée et programmés en fonction notamment des rampes de courant appliquées par le module de contrôle en énergie continue sous le contrôle du coeur de traitement numérique et des données de position et de proximité reçues des capteurs des divers mécanismes d'actionnement des mécanismes d'inversion de poussée comme des portes d'inverseur de poussée ;
- une première ligne de défense comporte un verrou tertiaire associé à un mécanisme d'inversion de poussée comme une porte d'inverseur de poussée, si les deux mécanismes d'inversion de poussée sont couplés ou deux verrous tertiaires associés à chacun des mécanismes d'inversion de poussée s'ils sont mécaniquement indépendants, une deuxième ligne de défense comporte des premier et second verrous primaires associés dans un premier mécanisme d'entraînement de porte, et une troisième ligne de défense comporte des premier et second verrous primaires associés dans un second mécanisme d'entraînement de porte ;
- au niveau des sources d'alimentation, les sources d'alimentation haute puissance et basse puissance sont composées dans un combinateur dont la sortie est connectée en parallèle aux deux unités d'entraînement motorisé ;
- la première ligne de défense comporte aussi au niveau des sources une alimentation de verrou tertiaire connectée au verrou tertiaire par un interrupteur commandé recevant un ordre du niveau des ordres d'un premier calculateur de l'avion, la deuxième ligne de défense comporte aussi un deuxième calculateur de l'avion pour commander un interrupteur commandé sur la source d'alimentation et la troisième ligne de défense comporte une source d'alimentation commandée par un calculateur de contrôle du moteur.

L'invention concerne aussi une nacelle de moteur d'aéronef à inverseur de poussée. Selon l'invention, la nacelle comporte un système d'inverseur de poussée selon l'invention.

D'autres avantages et caractéristiques de la présente invention seront mieux compris à l'aide de la description et des dessins annexés parmi lesquels :
- la Figure 1 représente les principaux éléments d'un inverseur de poussée électrique dans un mode de réalisation de l'invention ;
- la Figure 2 représente une partie d'un calculateur de commande d'inverseur de poussée utilisé dans le mode de réalisation de la Figure 1 ;
- la Figure 3 représente un mode de réalisation d'une partie électromécanique de l'inverseur de poussée de la Figure 1 ; et
- la Figure 4 représente un mode de réalisation d'un module de pilotage du calculateur de commande d'inverseur de poussée utilisé dans le mode de réalisation de la Figure 1.

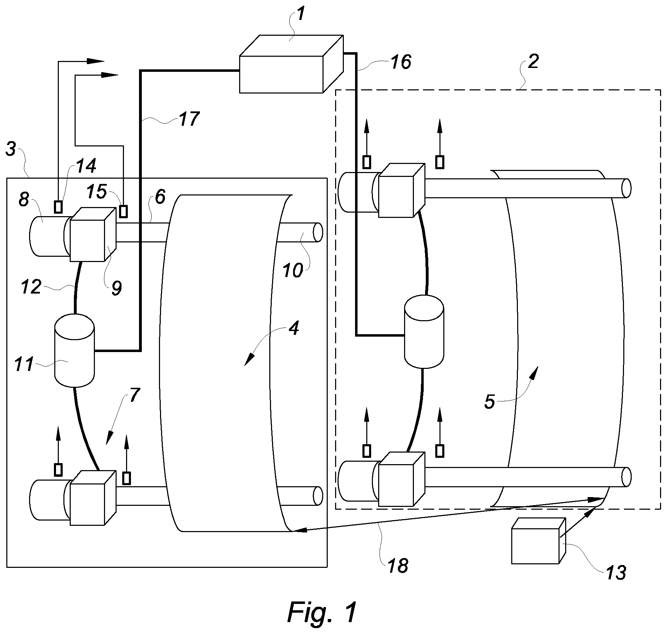

A la Figure 1, on a représenté les principaux éléments d'un inverseur de poussée électrique dans un mode de réalisation de l'invention. Dans ce mode de réalisation, les mécanismes d'inversion de poussée sont deux portes 4 et 5, disposées sur chaque côté de la nacelle (non représentée) du moteur d'aéronef. Les deux portes 4 et 5 sont coulissantes le long d'un axe longitudinal (non représenté) de la nacelle de façon à découvrir le canal secondaire de réflexion du jet issu de la soufflante du moteur d'aéronef et le retourner vers l'avant en opposition au sens de vol.

Chaque porte 4 ou 5 est actionnée par son propre mécanisme 2 ou 3, ces mécanismes étant sensiblement identiques. Le mécanisme d'actionnement de porte 3, identique au mécanisme d'actionnement de porte 2, comporte dans le mode de réalisation de la Figure 1, deux vérins 6 et 7 dont la tige mobile en translation est connectée à un point de la porte 4 de manière à l'entraîner dans le mouvement désiré lorsque l'inverseur de poussée est actionné. Les deux vérins 6 et 7 sont sensiblement identiques et seul le vérin 6 sera décrit.

Le vérin 6 comporte donc une tige mobile 10 qui entre et sort d'un boîtier 9 de connexion mécanique à une unité d'entraînement motorisé 11 qui permet de mobiliser le vérin 6. La liaison mécanique de l'unité d'entraînement motorisé 11 au boîtier 9 de connexion mécanique est assurée par un arbre flexible 12. L'unité d'entraînement motorisé 11 est commune aux deux vérins 6 et 7 de sorte que leurs mouvements sont ainsi parfaitement synchronisés, aux jeux mécaniques près.

Le vérin 6 d'actionnement de porte, identique au vérin 7, comporte un verrou primaire 8, une boîte de connexion mécanique 9 et une tige de vérin 10 capable de rentrer et de sortir du corps du vérin sous l'action de la boîte de connexion mécanique 9. La tige de vérin 10 présente une extrémité libre solidarisée d'un point déterminé de la porte 4 de l'inverseur de poussée. Le corps du vérin 6 est solidaire d'une structure de la nacelle (non représentée) fixe relativement à la porte de l'inverseur de poussée.

Dans d'autres modes de réalisation, le mécanisme d'inversion de poussée ne comporte pas de portes, mais des grilles. Le mécanisme d'actionnement de porte peut alors être converti en mécanisme d'actionnement de grille de l'inverseur de poussée à l'aide des informations de la présente invention.

Le vérin 6 d'actionnement de porte comporte aussi un verrou primaire 8 qui comporte une partie mobile (non représentée) qui coopère dans une relation de verrouillage mécanique avec une partie déterminée (non représentée) de la structure de la nacelle (non représentée) fixe relativement à la porte 4 de l'inverseur de poussée. Dans un mode de réalisation, le verrou primaire est directement intégré au vérin en utilisant la technique du mouvement perdu (lost motion) décrite notamment dans le document US-A-2007/0220998.

Le mécanisme d'actionnement de porte de l'inverseur de poussée est placé sous le contrôle d'une unité de commande 1 de l'inverseur de poussée 1. A cette fin, chaque mécanisme d'actionnement de porte 2 ou 3 est connecté à l'unité de commande de l'inverseur de poussée 1 par l'intermédiaire d'une liaison électrique 16 ou 17 qui lui transmet son énergie et échange des informations avec eux.

La liaison électrique 17 provenant de l'unité de commande 1 de l'inverseur de poussée pour alimenter le mécanisme d'actionnement de porte 3 est notamment connectée à l'unité d'entraînement motorisé 11 à laquelle elle amène l'énergie électrique et tous ordres d'entraînement configurés à l'actionnement de la porte 4.

La liaison électrique 17 provenant de l'unité de commande 1 de l'inverseur de poussée au mécanisme d'actionnement de porte 3 est aussi connectée au verrou primaire 8 de façon à commander l'état de verrouillage, respectivement déverrouillage, du verrou primaire 8. Dans un mode préféré de réalisation de l'invention, le vérin d'actionnement 6 étant du type à mouvement perdu comme précédemment exposé, le verrouillage ou le déverrouillage du verrou primaire est commandé avec l'ordre de démarrage de l'unité d'entraînement motorisé 11. En effet, dans le vérin à mouvement perdu, le verrou primaire est en réalité intégré dans le vérin et il est activé dans les premiers tours de rotation de l'unité d'entraînement motorisé 11.

Le vérin 6 du mécanisme d'actionnement de porte 3 comporte aussi un capteur de proximité 14 disposé en relation avec le dispositif de verrouillage primaire 8 et un capteur de position 15 associé à la tige mobile 10 dont les signaux sont transmis, détectés, mis en forme et utilisés par l'unité de commande 1 de l'inverseur de poussée 1.

Enfin, l'inverseur de poussée de l'invention comporte au moins un verrou tertiaire 13 qui permet de réaliser une fonction de verrouillage en parallèle avec les premier et second verrous primaires des vérins d'un mécanisme d'actionnement de porte 2 ou 3. Dans le mode de réalisation de la Figure 1, en effet, les deux portes 4 et 5 ont des mouvements mécaniquement liés, par exemple à l'aide d'un mécanisme de liaison, schématiquement représenté par la flèche 18. Dans un tel mode de réalisation, un seul verrou tertiaire 13 est prévu.

Dans d'autres modes de réalisation, les deux portes 4 et 5 sont mécaniquement indépendantes. Il est alors prévu un autre verrou tertiaire identique au verrou tertiaire 13. Le (ou les) verrou(s) tertiaire(s) comporte(nt) un mécanisme mobile sous l'action d'une commande appliquée par l'unité de commande 1 de l'inverseur de poussée qui permet de lier ou de délier un point déterminé de la porte 5 à un point de la structure de la nacelle (non représentée) fixe par rapport à la porte 5.

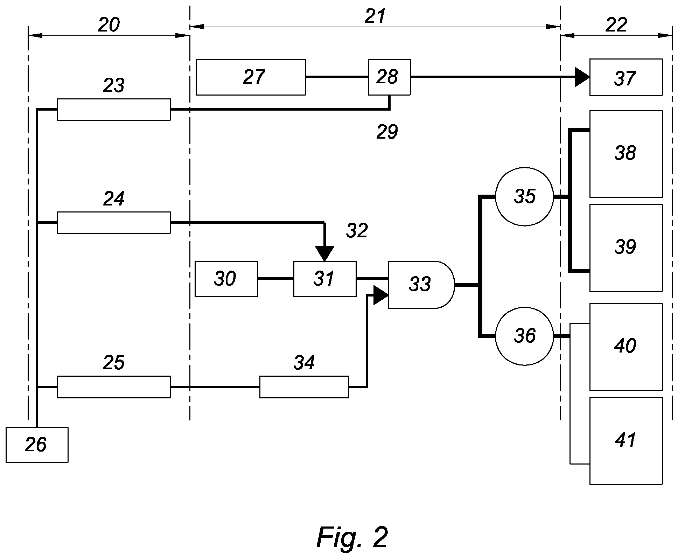

A la Figure 2, on a représenté une partie d'un calculateur de commande d'inverseur de poussée utilisé dans le mode de réalisation de la Figure 1.

Selon un aspect de l'invention, le système d'inverseur de poussée électrique est construit en trois lignes de défense qui présentent chacune :
- un étage de commande 20 ;
- un étage de puissance 21 ; et
- un étage électromécanique 22.

Une ligne de défense est une sécurité d'activation de l'inverseur de poussée. La réglementation impose trois sécurités à chaque stade. Dans le fonctionnement de l'inverseur de poussée, sans le déverrouillage de ces trois sécurités, l'inverseur de poussée ne fonctionnera pas.

Une première ligne de défense est composée dans l'étage de commande par un premier calculateur 23 de contrôle du fonctionnement de l'inverseur de poussée, qui est connecté dans le deuxième étage de puissance 21 par un circuit de puissance d'alimentation 27 du verrou tertiaire qui débite l'énergie nécessaire au fonctionnement du verrou tertiaire à travers un interrupteur commandé 28, commandé par un port de commande 29 par une ligne de commande issue du premier calculateur 23 de contrôle du fonctionnement de l'inverseur de poussée. La première ligne de défense construite autour du verrou tertiaire n'est pas affectée par les lignes de défense associées (voir plus loin) aux vérins à mouvement perdu, de sorte que la commande de l'interrupteur commandé 28 est distincte des commandes des moteurs électriques associés aux vérins à mouvement perdu des verrous primaires au moyen de l'utilisation du calculateur avion. La première ligne de défense dans le troisième étage électromécanique comporte un électro-aimant du verrou tertiaire 37 proprement dit, alimenté par une borne de sortie de l'interrupteur commandé 28. Le premier calculateur 23 de contrôle du fonctionnement de l'inverseur de poussée est structurellement différent du calculateur moteur et nacelle de façon à répondre à une exigence d'indépendance fonctionnelle.

Une deuxième ligne de défense est composée dans l'étage de commande 20 par un deuxième calculateur 24 de contrôle du fonctionnement de l'inverseur de poussée, qui est connecté dans le deuxième étage de puissance au port de commande 32 d'un interrupteur commandé 31. L'interrupteur commandé 31 est alimenté par un circuit d'alimentation électrique 30. La sortie de l'interrupteur commandé 31 est connecté à un combinateur 33 dont la sortie est connectée en parallèle aux unités d'entraînement motorisé 35 et 36 des mécanismes d'actionnement de porte. Particulièrement, l'unité d'entraînement motorisé 35 de la Figure 2 correspond à l'unité d'entraînement motorisé 11 du mécanisme 3 de la Figure 1. La deuxième ligne de défense dans le troisième étage électromécanique 22, comporte un premier verrou primaire 38 et un second verrou primaire 39. Le premier verrou primaire 38 de la Figure 2 correspond au verrou 8 du vérin 6 du mécanisme d'actionnement de porte 3 et le second verrou primaire 39 de la Figure 2 correspond au verrou (sans référence) du vérin 7 du mécanisme d'actionnement de porte 3.

Une troisième ligne de défense est composée dans l'étage de commande 20 par un calculateur 25 de contrôle du moteur associé à l'inverseur de poussée, et qui est connecté dans le deuxième étage de puissance à un port d'entrée d'une unité de commande de l'inverseur de poussée 34 dont une ligne de commande de sortie est connectée à une seconde entrée du combinateur 33 décrit pour réaliser la deuxième ligne de défense. La borne de sortie du combinateur 33 est connectée en parallèle aux unités d'entraînement motorisé 35 et 36 des mécanismes d'actionnement de porte. Particulièrement, l'unité d'entraînement motorisé 36 de la Figure 2 correspond à l'unité d'entraînement motorisé du mécanisme 2 de la Figure 1. La troisième ligne de défense dans le troisième étage électromécanique 22, comporte un premier verrou primaire 40 et un second verrou primaire 41. Le premier verrou primaire 40 de la Figure 2 correspond au verrou du premier vérin (sans référence) du mécanisme d'actionnement de porte 3 et le second verrou primaire 41 de la Figure 2 correspond au verrou (sans référence) du second vérin du mécanisme d'actionnement de porte 2.

Dans le cadre de l'invention, on note qu'on a besoin en plus des calculateurs nécessaires au fonctionnement de l'inverseur, de calculateurs déjà existant comme un calculateur FADEC pour rajouter de l'indépendance dans le système de commande des vérins à mouvement perdu pour éviter d'avoir des modes communs de commande.

Le verrou tertiaire est déverrouillé par une commande issue d'un calculateur avion, les verrous primaires par le système d'actionnement (ou le calculateur moteur). Les commandes des verrous primaires 40 et 41 et tertiaire 37 ne sont pas forcément phasés.

Dans l'exemple de réalisation de la Figure 2, comme dans celui de la Figure 1, les deux mécanismes d'inversion de poussée, ici des portes d'inverseur, sont avec des mouvements liés. Un seul verrou tertiaire est donc représenté dans la première ligne de défense. Dans un autre exemple de réalisation, dans lequel les deux mécanismes d'inversion de poussée, ici des portes d'inverseur, sont avec des mouvements indépendants, chaque mécanisme d'inversion de poussée comme une porte d'inverseur, est doté de son propre verrou tertiaire.

Dans la stratégie de commande de l'inverseur de poussée de l'invention, au niveau des ordres : il faut un ordre du contrôleur du moteur associé à l'inverseur de poussée qui soit confirmé par un ordre de chacun des deux calculateurs de l'avion.

Au niveau mécanique, les trois verrous comprenant deux verrous primaires et un verrou tertiaire soient déverrouillés.

Au niveau de l'alimentation électrique, la stratégie de commande de l'inverseur de poussée de l'invention met en oeuvre trois sources d'alimentation électrique différentes pour que l'ensemble fonctionne : une source haute puissance, une source basse puissance et la source réservée au verrou tertiaire.

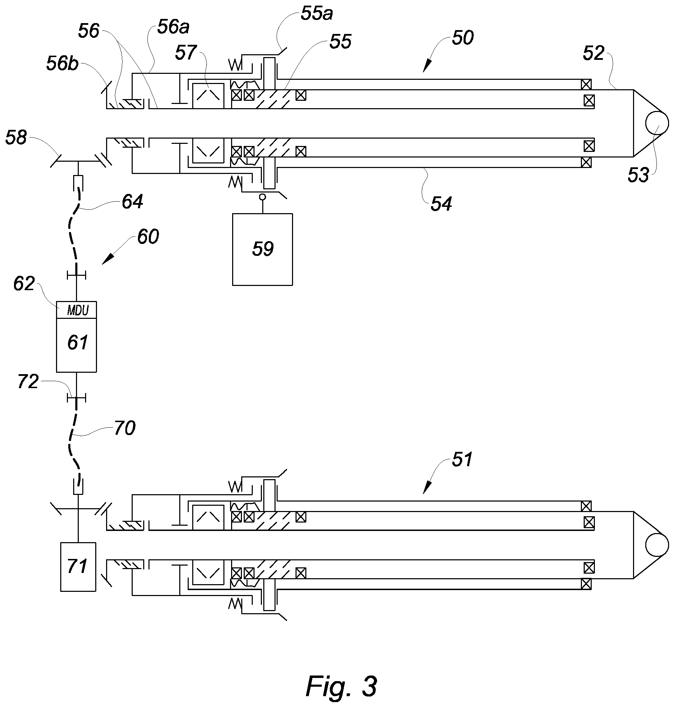

A la Figure 3, on a représenté un mode de réalisation d'une partie électromécanique de l'inverseur de poussée de la Figure 1 qui détaille notamment les deux vérins à mouvement perdu d'un mécanisme d'actionnement d'inverseur de poussée, comme un mécanisme d'actionnement de porte du genre de celui représenté à la Figure 1.

Les deux vérins haut 50 et bas 51 sont sensiblement identiques et seul le vérin haut 50 sera détaillé. Il comporte une tige mobile 52 dont l'extrémité libre porte un oeil destiné à venir se solidariser avec un point fixe de la porte d'inverseur de poussée à entraîner.

La tige mobile 52 entre dans le corps 54 du vérin et aboutit sur un ensemble de segments de verrouillage 55 ainsi qu'il est notamment décrit dans le document US-A-2007/0220998. Une came de verrouillage 55a rappelée par des ressorts représentés (sans référence) permet d'engager les segments 55 de manière à verrouiller ou à déverrouiller la tige mobile 52. Un roulement 57 supporte un arbre d'entrée 56 en deux parties dont une première partie traverse un boîtier fixe 56a et porte une roue d'entrée 56b et dont une seconde partie traverse à nouveau le boîtier fixe 56A pour s'étendre à l'intérieur de la tige mobile 52 du vérin, qui est entraînée par les segments de verrouillage 55.

L'unité d'entraînement motorisé 60 comporte essentiellement un moteur électrique 61 alimenté par la deuxième ligne de défense ou la troisième ligne de défense (Figure 2). L'arbre rotorique du moteur 61 est associé à un mécanisme d'entraînement manuel 62 complémentaire prévu pour les manoeuvres lors des opérations de maintenance et de contrôle technique. L'arbre rotorique du moteur 61 est un arbre double sortie comportant des sorties couplées par une roue 72 pour entraîner un arbre flexible 64 pour entraîner une roue 58 engrenée sur la roue d'entrée 56b et un arbre flexible 70 pour entraîner une roue engrenée sur la roue d'entrée (sans référence) analogue de la roue d'entrée 56b sur le vérin bas 51.

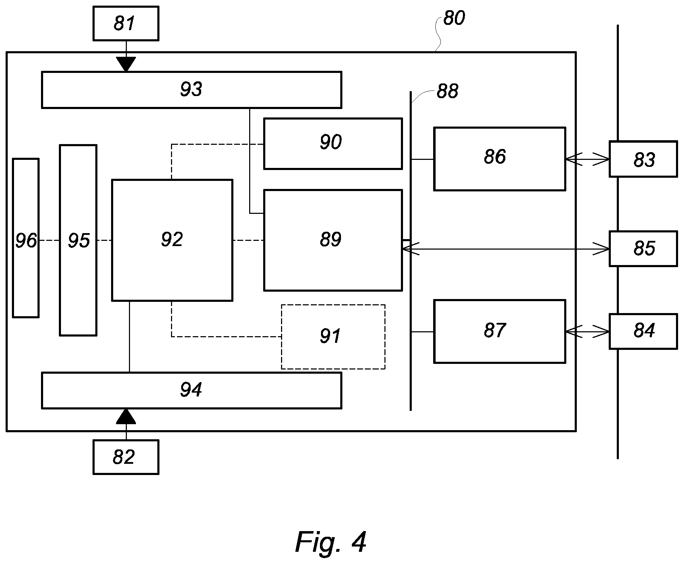

A la Figure 4, on a représenté un mode de réalisation d'un module de pilotage du calculateur de commande d'inverseur de poussée utilisé dans le mode de réalisation de la Figure 1. Le module 80 ou unité de commande de l'inverseur de poussée a été représenté en 1 à la Figure 1 et est maintenant détaillé.

Il comporte à partir du réseau d'alimentation en courant continu de l'avion 81. Le réseau 81 peut cependant être d'un type quelconque. Le réseau 81 est connecté par une interface de réseau qui assure ici un régulateur en courant continu 93 à un processeur de courant continu 89 dont la sortie est connectée à un module de contrôle en énergie continue 89. En général ; l'interface de réseau 93 est doté de ressources permettant de réaliser les tâches d'alimentation secondaires nécessaires au fonctionnement du module de puissance. A la sortie du module de contrôle 89 sont connectés en parallèle deux onduleurs 86 et 87 qui débitent par des liaisons 83 et 84 l'énergie électrique alternative aux unités d'entraînement comme l'unité d'entraînement motorisé 11 du mécanisme d'actionnement de porte 3 du système de la Figure 1.

Le module de contrôle en énergie continue 89 reçoit par ailleurs les informations des capteurs de position et de proximité 85 des différents vérins du système de l'invention. Il reçoit aussi les commandes d'un coeur de traitement numérique 92 qui permet notamment de produire les rampes de courant permettant de gérer l'actionnement des mécanismes de l'inverseur de poussée entraînés par les unités d'entraînement motorisé comme l'unité 11 pour le mécanisme d'entraînement de porte 3 (Figure 1) Plus généralement, le module de contrôle en énergie 89 permet de conformer les profils de courant / tension nécessaires au pilotage du mécanisme.

Le coeur de traitement numérique 92 commande aussi un circuit de contrôle 91 des freins associés aux mécanismes comme des portes ou des grilles de l'inverseur de poussée actionnés par les mécanismes d'actionnement de porte 2 et 3 (Figure 1). De tels freins permettent de contrôler les accostages des éléments mobiles de l'inverseur de poussée comme des portes d'inverseur de poussée, avec la structure fixe associée de la nacelle. Ces freins sont programmés en fonction notamment des rampes de courant appliquées par le module de contrôle en énergie continue 89 sous le contrôle du coeur de traitement numérique 92 et des données de position et de proximité reçues des capteurs 85 des divers mécanismes d'actionnement de porte 2 et 3 (Figure 1).

Le coeur de traitement numérique 92 commande aussi un circuit d'alimentation 90 des ressources électriques de la nacelle.

Par ailleurs l'unité de commande 80 de l'inverseur de poussée comporte aussi un régulateur 94 connecté au réseau d'alimentation basse puissance en courant continu 82 de l'aéronef pour fournir les polarisations électriques convenables aux différents circuits de l'unité de commande 80.

Le module 95 réalise une interface numérique avec l'avion qui permet de recevoir les consignes et les ordres de commande du système d'inverseur de poussée électrique de l'invention selon un protocole de communication déterminé comme un protocole IP.

Le dispositif 96 est un fond de panier (également connu sous le nom de « backplane »), réalisé par une carte d'interconnexion qui comporte notamment des protections et filtrage vis-à-vis de la foudre et assure la compatibilité électromagnétique.

## Revendications

1. Système d'inverseur de poussée électrique pour nacelle de moteur d'aéronef, comportant au moins un mécanisme d'inversion comme une porte d'inverseur et un mécanisme d'actionnement (2 ou 3) du mécanisme d'inversion, le mécanisme d'actionnement (2 ou 3) comportant un premier (6) et un second (7) vérin d'entraînement, chaque vérin comportant un boîtier de connexion mécanique (9), un verrou primaire (8) et une tige mobile (10) solidaire d'un point lié au mécanisme d'inversion de poussée associé, comme une porte d'inverseur, une unité d'entraînement (11) motorisé étant connectée mécaniquement par des arbres flexibles (12) aux boîtiers de connexion mécanique (9) de chaque vérin (6, 7) du mécanisme d'actionnement (2 ou 3) et mise en mouvement sous la commande d'une unité de commande (1) à l'aide d'une liaison électrique (16, 17) et un verrou tertiaire (13) pour solidariser le mécanisme d'inversion de poussée associé comme une porte d'inverseur de poussée à une structure fixe de la nacelle, **caractérisé en ce que** le verrou primaire (8 ; 55, 55a) est intégré au vérin d'entraînement (6 ; 50), le vérin d'entraînement étant du type à mouvement perdu.

2. Système d'inverseur de poussée selon la revendication 1, **caractérisé en ce qu'**il comprend une pluralité de mécanismes d'inversion de poussée, comme des portes d'inverseur de poussée, qui sont mécaniquement liés (18) et **en ce que** un seul verrou tertiaire (13) est disposé en relation avec l'un des mécanismes d'actionnement de porte (2, 3) ou plus généralement de mécanisme d'inversion de poussée associé.

3. Système d'inverseur de poussée selon au moins l'une quelconque des revendications précédentes, **caractérisé en ce que** le système est configuré en lignes de défense selon au moins trois niveaux (20-22), à savoir :
- au niveau de l'unité de commande (1) et des ordres (20), un ordre du contrôleur du moteur associé à l'inverseur de poussée étant confirmé par un ordre de chacun d'au moins deux calculateurs de l'avion et/ou du moteur et/ou de la nacelle de manière à assurer une redondance fonctionnelle,
- au niveau mécanique (22), les trois verrous comprenant deux verrous primaires (38-41) et un verrou tertiaire (37) étant déverrouillés,
- au niveau de l'alimentation électrique (21), trois sources d'alimentation électrique différentes étant disposées pour que le système d'inverseur de poussée fonctionne et comprenant une source haute puissance (30), une source basse puissance (34) et une source (27) réservée au verrou tertiaire, de sorte que l'absence de déverrouillage lors de l'activation du système d'une seule ligne de défense entraîne le blocage du déploiement de l'inverseur de poussée.

4. Système d'inverseur de poussée selon la revendication 3, du type comportant deux mécanismes d'inversion de poussée (2, 3) comme des mécanismes d'actionnement de porte d'inverseur de poussée, **caractérisé en ce que** l'unité de commande (1 ; 80) de l'inverseur de poussée comporte un coeur de traitement (92) qui transmet des ordres de commande à un processeur de courant (89) connecté à un module de contrôle en énergie connecté en parallèle à deux onduleurs (86, 87) qui débitent par des liaisons (83, 84) l'énergie électrique alternative à l'unité d'entraînement motorisé (11) de chaque mécanisme d'inversion de poussée, le module de contrôle en énergie continue (89) recevant les informations de capteurs de position et de proximité (85) des différents vérins des mécanismes d'inversion de poussée de sorte que les commandes du coeur de traitement numérique (92) produisent des rampes de courant pour gérer l'actionnement des mécanismes d'inversion de poussée entraînés par les unités d'entraînement motorisé.

5. Système d'inverseur de poussée selon la revendication 4, **caractérisé en ce que** le coeur de traitement numérique (92) commande aussi un circuit de contrôle (91) des freins associés aux mécanismes d'actionnement des mécanismes d'inversion de poussée comme des portes d'inverseur de poussée (2, 3) et programmés en fonction notamment des rampes de courant appliquées par le module de contrôle en énergie continue (89) sous le contrôle du coeur de traitement numérique (92) et des données de position et de proximité reçues des capteurs (85) des divers mécanismes d'actionnement des mécanismes d'inversion de poussée comme des portes d'inverseur de poussée (2, 3).

6. Système d'inverseur de poussée selon la revendication 3 ou 4, **caractérisé en ce qu'**une première ligne de défense comporte un verrou tertiaire (37) associé à un mécanisme d'inversion de poussée comme une porte d'inverseur de poussée, si les deux mécanismes d'inversion de poussée sont couplés (18) ou deux verrous tertiaires associés à chacun des mécanismes d'inversion de poussée s'ils sont mécaniquement indépendants, une deuxième ligne de défense comporte des premier et second verrous primaires (38, 39) associés dans un premier mécanisme d'entraînement de porte (2), et une troisième ligne de défense comporte des premier et second verrous primaires (40, 41) associés dans un second mécanisme d'entraînement de porte (3).

7. Système d'inverseur de poussée selon la revendication 6, **caractérisé en ce que**, au niveau des sources d'alimentation, les sources d'alimentation haute puissance (30) et basse puissance (34) sont composées dans un combinateur (33) dont la sortie est connectée en parallèle aux deux unités (35, 36) d'entraînement motorisé.

8. Système d'inverseur de poussée selon la revendication 7, **caractérisé en ce que** la première ligne de défense comporte aussi au niveau des sources (21) une alimentation de verrou tertiaire (27) connectée au verrou tertiaire (37) par un interrupteur commandé (28) recevant un ordre du niveau des ordres (20) d'un premier calculateur de l'avion (23), la deuxième ligne de défense comporte aussi un deuxième calculateur de l'avion (24) pour commander un interrupteur commandé (31) sur la source d'alimentation (30) et la troisième ligne de défense comporte une source d'alimentation (34) commandée par un calculateur de contrôle du moteur (25).

9. Nacelle de moteur d'aéronef à inverseur de poussée, **caractérisée en ce qu'**elle comporte un système d'inverseur de poussée selon l'une quelconque des revendications précédentes.

## Patentansprüche

1. Elektrisches Schubumkehrsystem für eine Triebwerksgondel eines Flugzeugs, mindestens einen Umkehrungsmechanismus, wie eine Umkehrtür, und einen Betätigungsmechanismus (2 oder 3) des Umkehrungsmechanismus beinhaltend, wobei der Betätigungsmechanismus (2 oder 3) einen ersten (6) und einen zweiten (7) Antriebszylinder beinhaltet, wobei jeder Zylinder einen mechanischen Anschlusskasten (9), einen Primärriegel (8) und eine bewegliche Stange (10) beinhaltet, die fest mit einem Punkt verbunden ist, welcher mit dem zugehörigen Schubumkehrungsmechanismus, wie einer Umkehrtür, verknüpft ist, wobei eine motorisierte Antriebseinheit (11) mechanisch durch flexible Wellen (12) an die mechanischen Anschlusskästen (9) eines jeden Zylinders (6, 7) des Betätigungsmechanismus (2 oder 3) angeschlossen ist, und unter Ansteuerung einer Steuerungseinheit (1) mithilfe einer elektrischen Verknüpfung (16, 17) in Bewegung versetzt wird, und einen Tertiärriegel (13), um den zugehörigen Schubumkehrungsmechanismus, wie eine Schubumkehrtür, fest mit einer feststehenden Struktur der Gondel zu verbinden, **dadurch gekennzeichnet, dass** der Primärriegel (8; 55, 55a) in den Antriebszylinder (6; 50) integriert ist, wobei der Antriebszylinder in der Art eines Zylinders mit verborgener Bewegung ist.

2. Schubumkehrsystem nach Anspruch 1, **dadurch gekennzeichnet, dass** es eine Vielzahl von Schubumkehrungsmechanismen, wie Schubumkehrtüren, umfasst, die mechanisch verknüpft (18) sind und dadurch, dass ein einziger Tertiärriegel (13) im Verhältnis mit dem einen der Türbetätigungsmechanismen (2, 3), oder allgemeiner eines zugehörigen Schubumkehrungsmechanismus angeordnet ist.

3. Schubumkehrsystem nach mindestens einem der vorstehenden Ansprüche, **dadurch gekennzeichnet, dass** das System in Schutzleitungen auf mindestens drei Stufen (20-22) konfiguriert ist, nämlich:
- auf der Stufe der Steuerungseinheit (1) und der Befehle (20), wobei ein Befehl der Motorsteuerung, welche der Schubumkehr zugeordnet ist, durch einen Befehl von jedem von mindestens zwei Rechnern des Flugzeugs und/oder des Motors und/oder der Gondel bestätigt wird, um für eine funktionelle Redundanz zu sorgen,
- auf der mechanischen Stufe (22), wobei die drei Riegel, welche zwei Primärriegel (38-41) und einen Tertiärriegel (37) umfassen, entriegelt sind,
- auf der Stufe der Stromversorgung (21), wobei drei verschiedene Stromversorgungsquellen angeordnet sind, damit das Schubumkehrsystem funktioniert, und eine Hochleistungsquelle (30), eine Niederleistungsquelle (34) und eine Quelle (27) umfassend, welche dem Tertiärriegel vorbehalten ist, sodass die Entriegelungsabwesenheit bei der Aktivierung des Systems einer einzigen Schutzleitung für die Blockierung des Ausfahrens der Schubumkehr sorgt.

4. Schubumkehrsystem nach Anspruch 3, in der Art zwei Schubumkehrungsmechanismen (2, 3), wie Schubumkehrtür-Betätigungsmechanismen, beinhaltend, **dadurch gekennzeichnet, dass** die Steuerungseinheit (1; 80) der Schubumkehr einen Verarbeitungskern (92) beinhaltet, welcher Steuerungsbefehle an einen Strom-Prozessor (89) sendet, der an ein Stromüberwachungsmodul angeschlossen ist, welches parallel an zwei Wechselrichter (86, 87) angeschlossen ist, welche über Anschlüsse (83, 84) Wechselstrom an die motorisierte Antriebseinheit (11) eines jeden Schubumkehrungsmechanismus abgeben, wobei das Gleichstromüberwachungsmodul (89) die Informationen von Positionssensoren und Näherungssensoren (85) der verschiedenen Zylinder der Schubumkehrungsmechanismen empfängt, sodass die Steuerungen des digitalen Bearbeitungskerns (92) Stromrampen erzeugen, um die Betätigung der Schubumkehrungsmechanismen zu verwalten, welche durch die motorisierten Antriebseinheiten angetrieben werden.

5. Schubumkehrsystem nach Anspruch 4, **dadurch gekennzeichnet, dass** der digitale Bearbeitungskern (92) auch einen Überwachungskreis (91) der Bremsen, welche den Schubumkehr-Betätigungsmechanismen, wie den Schubumkehrtüren (2, 3), zugeordnet sind, steuert, und in Abhängigkeit vor allem der Stromrampen, welche durch das Gleichstromüberwachungsmodul (89) unter der Überwachung des digitalen Bearbeitungskerns (92) angewendet werden, und der Positions- und Näherungsdaten programmiert sind, welche von den Sensoren (85) der verschiedenen Betätigungsmechanismen der Schubumkehrungsmechanismen, wie den Schubumkehrtüren (2, 3), empfangen werden.

6. Schubumkehrsystem nach Anspruch 3 oder 4, **dadurch gekennzeichnet, dass** eine erste Schutzleitung einen Tertiärriegel (37) beinhaltet, welcher einem Schubumkehrungsmechanismus, wie einer Schubumkehrtür, zugeordnet ist, wenn die beiden Schubumkehrungsmechanismen gekoppelt (18) sind oder zwei Tertiärriegel, die jedem der Schubumkehrungsmechanismen zugeordnet sind, wenn sie mechanisch unabhängig sind, eine zweite Schutzleitung einen ersten und einen zweiten Primärriegel (38, 39) beinhaltet, die in einem ersten Türantriebsmechanismus (2) zugeordnet sind, und eine dritte Schutzleitung einen ersten und einen zweiten Primärriegel (40, 41) beinhaltet, welche in einem zweiten Türantriebsmechanismus (3) zugeordnet sind.

7. Schubumkehrsystem nach Anspruch 6, **dadurch gekennzeichnet, dass** auf der Stufe der Versorgungsquellen die Quellen für Hochleistung (30) und Niederleistung (34) in einem Kombinator (33) zusammengestellt sind, dessen Ausgang parallel an die beiden Einheiten (35, 36) für motorisierten Antrieb angeschlossen ist.

8. Schubumkehrsystem nach Anspruch 7, **dadurch gekennzeichnet, dass** die erste Schutzleitung auch auf der Stufe der Quellen (21) eine Versorgung des Tertiärriegels (27) beinhaltet, welche an den Tertiärriegel (37) durch einen gesteuerten Schalter (28) angeschlossen ist, der einen Befehl von der Stufe der Befehle (20) eines ersten Rechners des Flugzeugs (23) empfängt, die zweite Schutzleitung auch einen zweiten Rechner des Flugzeugs (24) beinhaltet, um einen gesteuerten Schalter (31) auf der Versorgungsquelle (30) zu steuern und die dritte Schutzleitung eine Versorgungsquelle (34) beinhaltet, welche durch einen Überwachungsrechner des Motors (25) gesteuert wird.

9. Triebwerksgondel eines Flugzeugs mit Schubumkehr, **dadurch gekennzeichnet, dass** sie ein Schubumkehrsystem nach einem der vorstehenden Ansprüche beinhaltet.

## Claims

1. An electric thrust reverser system for an aircraft engine nacelle including at least one thrust reverser mechanism such as a thrust reverser door and an actuating mechanism (2 or 3) of the thrust reverser mechanism, the actuating mechanism (2 or 3) including a first (6) and a second (7) drive cylinder, each drive cylinder including a mechanical connection casing (9), a primary lock (8) and a movable rod (10) secured to a point connected to the thrust reverser mechanism, such as a thrust reverser door, a motor-actuated drive unit (11) being mechanically connected via flexible shafts (12) to the mechanical connection casing (9) of each drive cylinder (6, 7) of the actuating mechanism (2 or 3) and set in motion by a command of a control unit (1) via an electrical connection (16, 17) and a tertiary lock (13) for securing the thrust reverser mechanism such as a thrust reverser door to a fixed structure of the nacelle, **characterized in that** the primary lock (8; 55, 55a) is integrated to the drive cylinder (6; 50), the drive cylinder being of the lost motion type.

2. The electric thrust reverser system according to claim 1, **characterized in that** it comprises a plurality of thrust reverser mechanisms, such as thrust reverser doors, which are mechanically connected (18) and **in that** a single tertiary lock (13) is disposed in connection with one of the door actuating mechanisms (2, 3) or more generally the associated thrust reverser mechanism.

3. The electric thrust reverser system according to at least any one of the preceding claims, **characterized in that** the system is configured into lines of defense according to at least three levels (20-22), namely:
- at the level of the control unit (1) and the commands (20), a command from a controller of a motor associated to the thrust reverser being confirmed by a command from each of at least two computers of the aircraft and/or of the engine and/or of the nacelle so as to provide a functional redundancy,
- at a mechanical level (22), the three locks comprising two primary locks (38-41) and a tertiary lock (37) being unlocked,
- at an electric power supply level (21), three different electric power supply sources being disposed so that the thrust reverser system operates and comprising a high power source (30), a low power source (34) and a source (27) dedicated to the tertiary lock, so that the absence of unlocking when activating the system of a single line of defense causes the blocking of the deployment of the thrust reverser.

4. The electric thrust reverser system according to claim 3, of the type including two thrust reverser mechanisms (2, 3) such as thrust reverser door actuation mechanisms, **characterized in that** the control unit (1; 80) of the thrust reverser includes a processing core (92) which transmits commands to a current processor (89) connected to a power control module connected in parallel to two inverters (86, 87) which deliver, via connections (83, 84), alternating electric power to the motor-actuated drive unit (11) of each thrust reverser mechanism, the continuous power control module (89) receiving the information from position and proximity sensors (85) of the various cylinders of the thrust reverser mechanisms so that the commands of the digital processing core (92) produce current ramps such as to manage the actuation of the thrust reverser mechanisms driven by the motor-actuated drive units.

5. The electric thrust reverser system according to claim 4, **characterized in that** the digital processing core (92) also controls a control circuit (91) of brakes associated to the actuating mechanisms of the thrust reverser mechanisms such as thrust reverser doors (2, 3) and programmed in particular according to the current ramps applied by the power control module (89) under the control of the digital processing core (92) and position and proximity data received from the sensors (85) of the various actuating mechanisms of the thrust reverser mechanisms such as thrust reverser doors (2, 3).

6. The electric thrust reverser system according to claim 3 or 4, **characterized in that** a first line of defense includes a tertiary lock (37) associated to a thrust reverser mechanism such as a thrust reverser door, if the two thrust reverser mechanisms are coupled (18) to each other or two tertiary locks associated to each of the thrust reverser mechanisms if they are mechanically independent of each other, a second line of defense includes first and second primary locks (38, 39) associated in a first door drive mechanism (2), and a third line of defense includes first and second primary locks (40, 41) associated in a second door drive mechanism (3).

7. The electric thrust reverser system according to claim 6, **characterized in that**, at the electric power supply sources level, the high power (30) and low power (34) sources are composed in a combiner (33) whose outlet is connected in parallel to the two motor-actuated drive units (35, 36).

8. The electric thrust reverser system according to claim 7, **characterized in that** the first line of defense also includes at the electric power supply sources level (21) a tertiary lock power supply (27) connected to the tertiary lock (37) via a controlled switch (28) receiving a command from the commands level (20) of a first computer of the aircraft (23), the second line of defense also includes a second computer of the aircraft (24) for controlling a controlled switch (31) on the power supply source (30) and the third line of defense includes a power supply source (34) controlled by a control computer of the engine (25).

9. An aircraft engine nacelle equipped with a thrust reverser, **characterized in that** it includes a thrust reverser system according to any one of the preceding claims.
